# FASCICULE DE BREVET EUROPEEN

(11) **EP 1 798 008 B1**
(45) Date de publication et mention de la délivrance du brevet: **01.10.2008**
(21) Numéro de dépôt: 05112180.4
(22) Date de dépôt: 14.12.2005
(51) Int. Cl.: B26B 11/00, A45D 29/02

(54) **Couteau de poche muni d'un coupe-ongle**
Taschenmesser mit einem Nagelknipser
Pocket knife with a nailclipper

(43) Date de publication de la demande: 20.06.2007
(73) Titulaire: WENGER S.A., CH-2800 Delémont (CH)
(72) Inventeur: Nussbaumer, Rolf, 4254, Liesberg Dorf (CH); Jeandupeux, Pierre-Alain, 2800, Delémont (CH); Wira, Yves, 68480, Winkel (FR)
(74) Mandataire: P&TS Patents & Technology Surveys SA

(56) Documents cités:
- FR-A- 2 717 055
- US-A- 2 575 652
- US-A- 2 771 674
- US-A- 2 811 776
- US-A- 4 903 514

## Description

### Domaine technique

La présente invention concerne un couteau de poche, en particulier un canif ou un couteau suisse, muni d'un coupe-ongle.

### Etat de la technique

W0200076365 décrit un couteau de poche comportant un coupe-ongle. Pour le replier, le coupe-ongle pivote autour d'un axe parallèle aux lames du couteau pour venir se ranger dans un logement ouvert dans une côte plastique recouvrant l'une des platines du couteau. Cette construction nécessite donc des côtes en plastique épaisses, peu esthétiques. Par ailleurs, la face inférieure du coupe-ongle reste visible même lorsque le coupe-ongle est repliée, ce qui nuit au design du couteau. Le coupe-ongle repliée est en outre exposé aux poussières et grains de sables susceptibles de le rayer ou de bloquer son mécanisme.

W02002058892 décrit un coupe-ongle particulièrement fin en position repliée, pouvant être intégré dans un couteau de l'armée suisse. Aucun enseignement spécifique sur la manière d'assembler le coupe-ongle dans un couteau ne peut être cependant être déduit de ce document.

W0200245911 décrit un coupe-ongle sur lequel différents ustensiles auxiliaires sont montés. Le dispositif ne constitue cependant pas un canif ni un couteau suisse, et ne permet pas d'associer le coupe-ongle à des grandes lames ou à la grande diversité d'ustensiles présents dans les couteaux suisses.

US2771674 décrit un couteau de poche muni d'un coupe-ongle qui peut être extrait perpendiculairement aux platines. La manipulation est malaisée.

US2811776 décrit un autre couteau de poche muni d'un coupe-ongle qui peut être extrait perpendiculairement aux platines. La manipulation est peu commode. Par ailleurs, le levier du coupe-ongle dépasse sur un côté du couteau même en position repliée.

FR2717055 décrit un coupe-ongle qui peut être replié dans un étui. Il ne s'agit pas d'un couteau de poche.

### Bref résumé de l'invention

Un but de la présente invention est de proposer un nouveau type de couteau de poche muni de coupe-ongle, en particulier un couteau exempt des limitations des couteaux connus.

Un autre but de l'invention est d'intégrer un coupe-ongle dans un couteau de poche, sans nuire à l'esthétique du couteau fermé.

Un autre but de l'invention est de protéger plus efficacement le coupe-ongle replié des rayures, des saletés et du sable.

Ces buts sont notamment atteintsau moyen d'un couteau de poche comportant deux platines parallèles servant de poignées, une pluralité d'ustensiles pivotant entre une position repliée entre lesplatines et une position déployée horsdes platines, et un coupe-ongle pivotant autour d'au moins un axe perpendiculaires auxdites platines, entre une position repliée entre lesdites platines et une position dépliée dans le prolongement desdites platines.

Cette construction a l'avantage de ranger le coupe-ongle en position repliée entre les platines. Le coupe-ongle est ainsi mieux protégé, et ne nuit pasà l'esthétique du couteau.

Afin de réduire l'épaisseur du coupe-ongle replié, ce dernier est de préférence pivotant autour d'un axe perpendiculaire au plan desdites platines. Il comporte de préférence deux branches parallèles aptes à être ouverte ou refermée, à la manière d'une pince, pour couper un ongle glissé entre l'extrémité des branches, ainsi qu'un levier articulé pour agir sur l'ouverture et la fermeture desdites branches.

D'autres caractéristiques et avantages de l'invention apparaîtront à la lecture de la description d'un mode de réalisation préférentiel illustré par les figures annexées qui montrent :
La figure 1 illustre une vue en perspective d'un couteau muni d'un coupe-ongle déployé.
La figure 2 illustre une vue en éclaté d'un coupe-ongle.
La figure 3 illustre une vue en perspective d'un couteau muni d'un coupe-ongle replié.
La figure 4 illustre une vue en perspective d'un coupe-ongle en position permettant de le replier.
La figure 5 illustre une vue en éclaté d'un couteau muni d'un coupe-ongle.

### Exemple(s) de mode de réalisation de l'invention

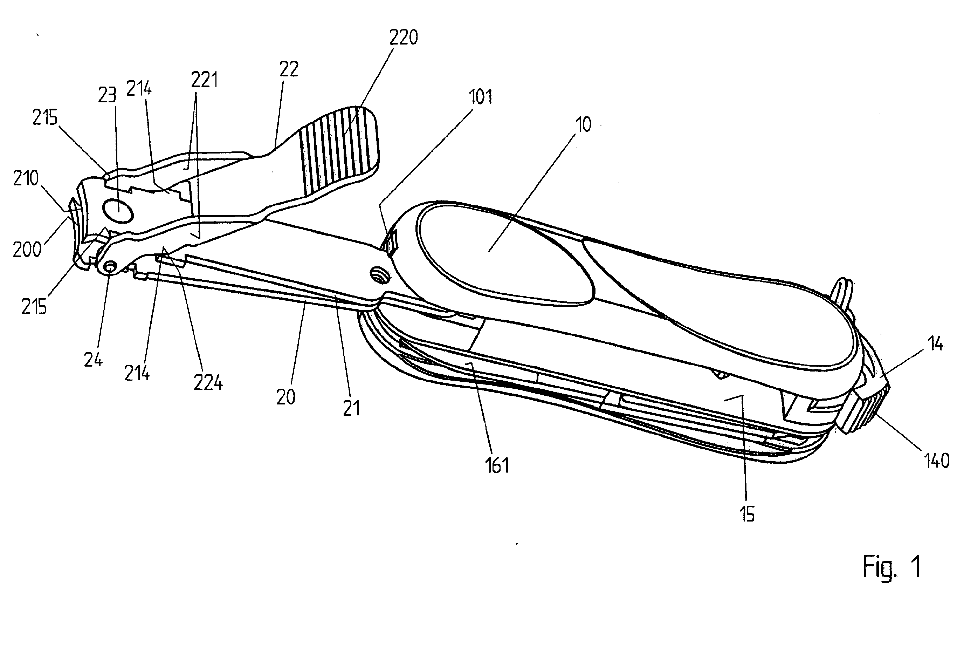

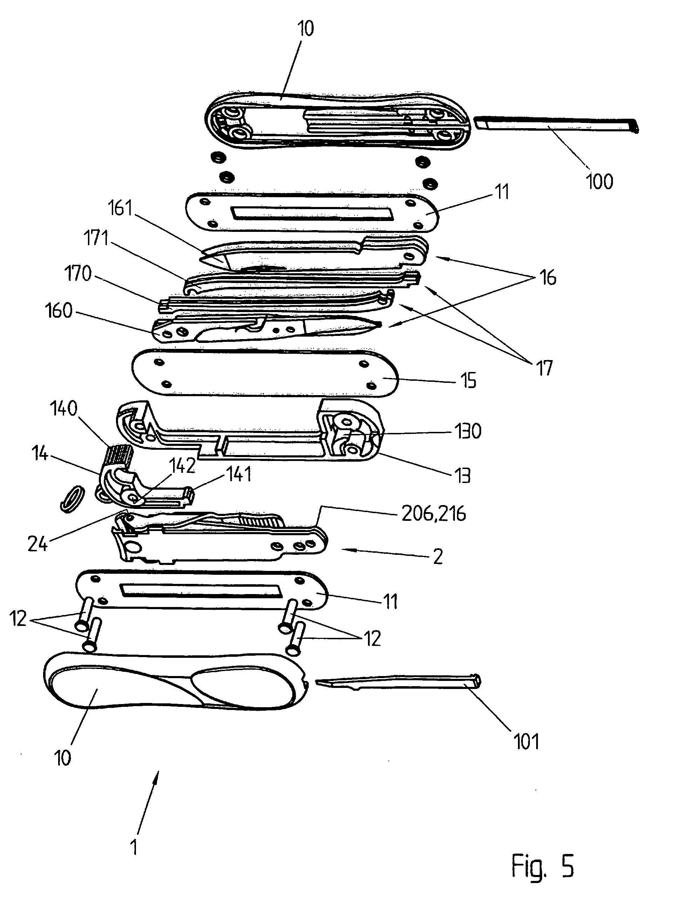

Un exemple de couteau de poche 1 selon l'invention est illustré sur les figures 1,3 et 5. Le couteau comporte deux platines métalliques 11 (figure 5) définissant un volume de rangement fermé sur 5 côtésdans lequel divers ustensiles 16 telsque lame de couteau 161, ciseaux pliants 160, tourne-vis, etc peuvent être rangés. Les ustensiles peuvent être extraits du volume de rangement en les pivotant autour d'un ou plusieurs axes 12 perpendiculaires aux platines du couteau, de manière à les déployer dans une position d'utilisation dans le prolongement du corpsdu couteau. Des ressortsdorsaux 17 qui ferment le dosdu volume de rangement permettent de forcer les ustensi les 16 à adoptes des positions prédéfinies, par exemple une position repliée, une position déployée à 180°dansl'axe du couteau, et éventuellement une position intermédiaire perpendiculaire au corpsdu couteau. Dans cet exemple, le ressort 170 agit sur les ciseaux 160 tandis que le ressort 171 agit sur le couteau 161. Les ustensiles 16 pivotent ainsi dans un plan parallèle au corpsdu couteau lorsde leur extraction. Une ou plusieurs plaques intermédiaires 15 parallèles aux platinesdu couteau permettent de partager le volume de rangement.

Lesdeux platines métalliques 11 du couteau sont chacune recouvertes par une côte 10 permettant de faciliter leur préhension. Dans l'exemple illustré, lesdeux côtes sont en matériau synthétique et munies d'un profil ergonomique permettant de saisir le couteau en appuyant le pouce dansune portion concave d'une des faces, et les doigts dans une portion concave de l'autre face. Des côtes plates, ainsi que descôtes métalliques, en boisou en corne par exemple peuvent aussi être prévues. Lescôtessont clipsées sur les platines sans vis ou rivetsapparents, et abritent un logement pour des ustensiles supplémentaires, danscet exemple des brucelles 100 et un cure-dent 101.

D'autres ustensiles, par exemple un tire-bouchon, un crochet, etc, peuvent aussi être montés sur la face dorsale du couteau.

La construction décrite ci-dessus correspond à celle d'un couteau de poche de type couteau suisse. Le couteau de l'invention comporte un ustensile supplémentaire sous la forme d'un coupe ongle 2 rangé dansune portion du volume de rangement fermée par un fond 13 en matériau synthétique. La figure 1 illustre ce coupe-ongle en position d'utilisation, déployé dans le prolongement du couteau de poche. Il comporte une première branche 20 sensiblement parallèle aux platinesdu couteau, une deuxième branche 21 et un levier 22. Lesdeux branches 20, respectivement 21 sont montéesen regard l'une de l'autre ; leursextrémitésprochesdu corpsdu couteau sont liées l'une à l'autre et articuléesautour d'un des axes 12 afin d'extraire le coupe-ongle 2 en le pivotant horsdu volume de rangement. Un bouton 14, décrit plus bas, permet soit de maintenir le coupe-ongle dans le volume de rangement, soit de l'en dégager.

L'autre extrémité 200 respectivement 210 de chacune desdeux branchesest pliée et affutée, en définissant deux arcsde cercle dont le rayon de courbure correspond approximativement au rayon de courbure moyen d'un ongle taillé. En rapprochant ces autres extrémités l'une de l'autre, par exemple à l'aide du levier 22, on les referme à la manière d'une pince pour couper un ongle glissé entre cesdeux extrémités.

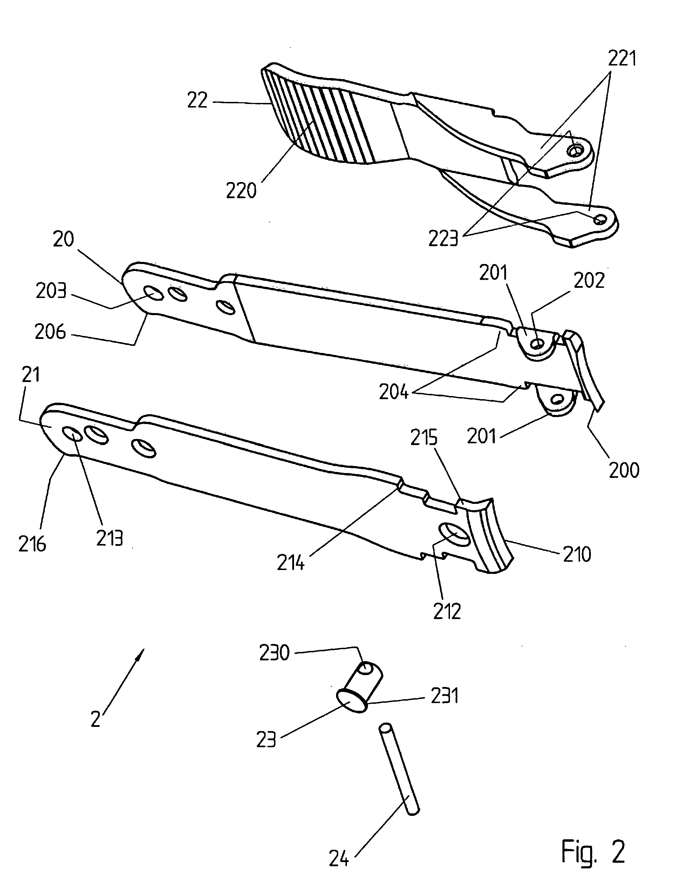

Les différents éléments constituant le coupe-ongle sont illustrés en particulier sur la figure 2. La première branche 20 est formée à partir d'une feuille de métal d'épaisseur constante découpée par exemple par étampage. Comme mentionné, l'extrémité en arcde cercle 200 est pliée vers l'intérieur du coupe-ongle et affutée de manière à constituer une des lames coupantes du coupe-ongle. En outre, deux portions latérales 201 proches de cette extrémité 200 sont également repliées à 90°vers l'intérieur du coupe-ongle. Ces portions latérales 201 sont muniesde trous de passage 201 pour un axe 24 parallèle aux platines 11 du couteau et qui permet de fixer le levier 22 de manière articulée. L'axe 24 est riveté, chassé, soudé d'un côté, ou déformé pour être maintenu dans les trous 201. La branche 20 comporte en outre un trou 203 pour le passage d'un des axes 12 permettant de lier le coupe-ongle de manière articulée au corpsdu couteau.

La deuxième branche 21 du coupe-ongle est également formée à partir d'une feuille de métal d'épaisseur constante découpée par exemple par étampage. Seule son extrémité 210 en arc de cercle est pliée vers l'intérieur du coupe-ongle et affutée de manière à constituer l'autre lame coupante du coupe-ongle. La deuxième branche 21 comporte en outre un trou 213 pour le passage d'un des axes 12 afin de lier la deuxième branche 21 à la première branche 20 et, de manière articulée, au corpsdu couteau.

La deuxième branche 21 est par ailleurs munie d'un autre trou 212, proche de l'extrémité 210, et destiné à y insérer un arrêt 23 coulissant. L'arrêt 23 est maintenu dans le trou d'une part au moyen de l'axe 24, qui traverse une ouverture 230 au travers de l'arrêt, et d'autre part au moyen d'une bordure annulaire 231 dont le diamètre est supérieur à celui du trou. L'arrêt 23 permet de limiter l'écartement maximal entre les deux branches 20, 21, ce qui permet de ranger le coupe-ongle dans le volume 15 sans devoir le forcer, et de le bloquer dansune position choisie. L'arrêt 23 coulisse dans le trou 212 lorsde l'actionnement du coupe-ongle.

Lesdeux branches20, 21 sont soudéesou rivetéesentre ellesde manière à ce que leurs extrémités proches du corpsdu couteau 1 restent solidaires, quelle que soit la position du coupe-ongle. La forme et le matériau des branches tend en revanche à écarter leurs extrémités coupantes 200, 210 l'une de l'autre, jusqu'à la limite d'écartement fixée par l'arrêt 23. Le coupe-ongle est actionné en rapprochant les deux branches l'une de l'autre, à l'encontre de cette force élastique. Dans l'exemple illustré, la deuxième branche 21 se déplace davantage que la première branche 20 lorsde l'actionnement.

Le levier 22 du coupe-ongle est lui aussi formé à partir d'une feuille de métal d'épaisseur constante découpée par exemple par étampage. Il comporte une portion centrale 220 destinée à actionner le levier au moyen du doigt, par exemple du pouce. Cette portion centrale peut être légèrement bombée, par exemple convexe en position d'actionnement, et/ou munie d'un profil ergonomique antidérapant, comme illustré sur la figure. Dans l'exemple illustré, la largeur de la portion centrale est supérieure à celle des branches20, 21, afin de fournir une large surface d'appui confortable pour le pouce.

Une portion latérale 221 repliée à 90° s'étend en outre de chaque côté de la portion centrale 220. Ces portions centrales 221 sont muniesde trous 223 en regard l'un de l'autre, permettant de faire passer l'axe 24 qui lie le levier 22 de manière articulée à la première branche 20.

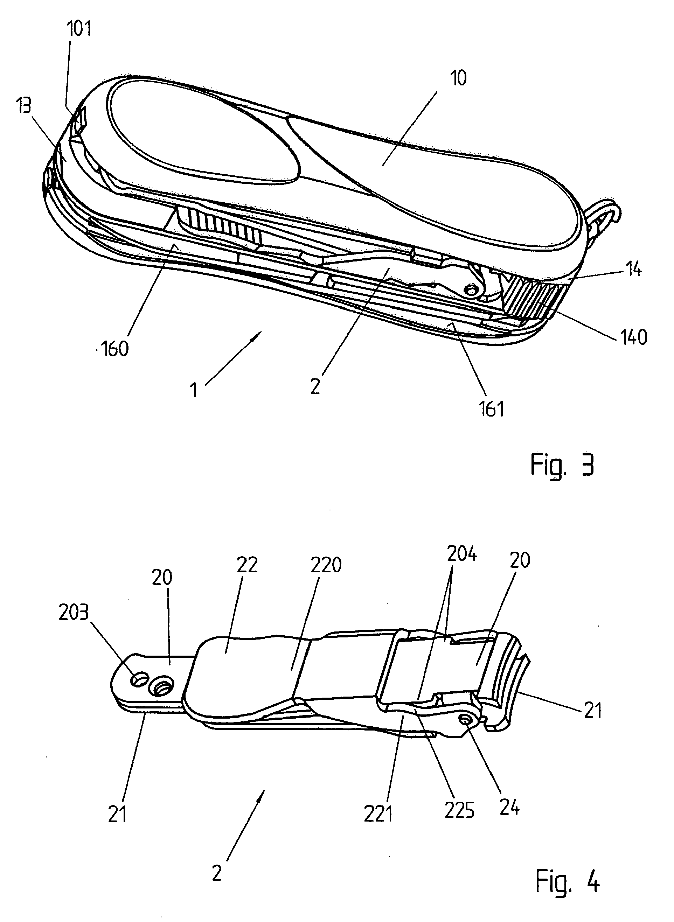

Lorsque le coupe-ongle 2 est plié dans le volume de rangement du couteau, dans la position illustrée sur lesfigures2, 3, 4 et 5, la première branche 20 est placée entre la deuxième branche 21 et le levier 22 dont les portions latérales221 sont dirigéesvers le centre du coupe ongle, ce qui permet de minimiser l'épaisseur totale. Des protubérances204 de chaque côté de la première branche 20 viennent en appui sur des portions225 des branches221 du levier pour maintenir ce levier refermé dans la position illustrée sur la figure 4.

Afin d'employer le coupe-ongle, il est tout d'abord nécessaire de le sortir du volume de rangement entre lesplatines 11 du couteau. Pour cela, l'utilisateur appuie sur une portion crantée 140 du bouton 14 de manière à le faire pivoter autour d'un des axes 12 traversant le trou 142. Un ergot 141 sur la face interne du bouton 14 est alors soulevé, ce qui permet de sortir le coupe-ongle 2 légèrement horsdu volume de rangement. L'utilisateur peut ensuite saisir le coupe-ongle 2 par une portion 221 en saillie au-dessus du couteau pour achever de le dégager et le pivoter par rapport au corpsdu couteau, par exemple jusque dans la position illustrée sur la Figure 1 dans le prolongement du corpsdu couteau. Des ergots 206, 216 (figure 5) sur les branches 20, 21 collaborent avec un élément élastique 130 lié au fond 13 pour maintenir le coupe-ongle danscette position déployée.

Pour utiliser le coupe-ongle, l'utilisateur pivote ensuite le levier 22 autour de l'axe 24, en déformant élastiquement les protubérances 204 et/ou leséléments221 afin que le levier sorte de la position initiale stable illustrée sur la figure 4. En poursuivant le pivotement du levier, on le fait passer de l'autre côté desdeux branches20, 21, dans la position illustrée sur la figure 1. La deuxième branche 21 se retrouve alorsentre la première branche 20 et le levier 22. Les portions latérales221 du levier 22 sont dirigéesvers l'extérieur du coupe-ongle, en sorte que l'épaisseur totale du coupe-ongle est plus importante. La face convexe et profilée du levier 22 est tournée vers le haut du coupe-ongle 2. Le levier est maintenu danscette position par les butées latérales 215 de chaque côté de la branche 21, qui empêche le levier 22 de pivoter de lui-même en sens inverse.

Danscette position, l'élasticité des branches20, 21 du coupe-ongle tend à leséloigner l'une de l'autre, l'écartement étant limité par l'arrêt 23. Une portion d'appui 224 de chaque côté du levier 22 est en appui sur un point de contact 214 de chaque côté de la deuxième branche 21, soulevant le levier dans la position d'actionnement illustrée sur la figure 1.

En appuyant sur l'extrémité 220 du levier 22, on exerce une pression sur ces portionsde contact 214, ce qui tend à refermer l'extrémité du coupe-ongle pour l'actionner. L'amplitude du mouvement est limitée par le contact entre **les extrémités coupantes 200, 210.** Lorsque l'utilisateur relâche le levier, l'élasticité des branchestend à ouvrir le coupe-ongle à nouveau.

D'autres modesde réalisation peuvent être imaginésdansle cadre de l'invention. En particulier, il est possible de prévoir d'autrestypes de moyens élastiques pour maintenir les deux branchesdu coupe-ongle éloignées l'une de l'autre, par exemple un ressort additionnel ou un élément actionné par les ressorts dorsaux élastiques du couteau de poche. Des couteaux de poche dans lesquels une portion d'une desbranchesdu coupe-ongle est constituée en levier peuvent aussi être imaginés.

### Liste de numéros de références

- 1: Couteau de poche
- 2: Coupe-ongle
- 20: Première branche
- 200: Extrémité tranchante de la première branche
- 201: Portions pliées de la première branche
- 202: Trou de passage pour l'axe 24
- 203: Trou de passage pour l'axe 12
- 204: Protubérancespour maintenir le levier en position fermée
- 206: Ergot de maintien du coupe-ongle déployé
- 21: Deuxième branche
- 210: Extrémité tranchante de la deuxième branche
- 212: Trou de passage pour l'arrêt 23
- 213: Trou de passage pour l'axe 12
- 214: Point de contact du levier sur deuxième branche
- 215: Butéesde maintien du levier en position ouverte
- 216: Ergot de maintien du coupe-ongle déployé
- 22: Levier
- 220: Portion centrale du levier
- 221: Portions latéralesdu levier
- 223: Trous dans les portions latérales du levier
- 224: Portion d'appui du levier sur la deuxième branche
- 225: Point de contact des protubérances 204 sur le levier
- 23: Arrêt
- 230: Trou de passage pour l'axe 24 dans l'arrêt
- 231: Rebord de l'arrêt 23
- 24: Axe du coupe-ongle
- 10: Côte revêtant la platine
- 100: Brucelles
- 101: Cu re-dent
- 11: Platine
- 12: Axesperpendiculairesaux platines
- 13: Fond
- 130: Elément élastique du fond
- 14: Bouton de dégagement du coupe-ongle
- 140: Portion crantée du bouton 14
- 141: Ergot
- 142: Trou de passage pour axe 12
- 15: Plaque intermédiaire
- 16: Ustensiles du couteau (collectivement)
- 160: Ciseaux
- 161: Lame
- 17: Ressortsdorsaux (collectivement)
- 170: Ressort dorsal pour ciseaux
- 171: Ressort dorsal pour couteau

## Revendications

1. Couteau de poche (1) comportant :
deux platines parallèles (11) servant de poignées,
une pluralité d'ustensiles (16) pivotant entre une position repliée entre lesdites platines et une position déployée hors desdites platines,
un coupe-ongle (2) pivotant autour d'au moins un axe (12) perpendiculaire au plan desdites platines, entre une position repliée entre lesdites platines et une position dépliée,
**caractérisé en ce que** ladite position dépliée est dans le prolongement desdites platines.

2. Le couteau de poche de la revendication 1, ledit coupe-ongle (2) comportant :
deux branches parallèles (20, 21) aptes à être ouvertes ou refermée, à la manière d'une pince, pour couper un ongle glissé entre les extrémités (200, 210) des branches,
et un levier articulé (22) pour agir sur l'ouverture et la fermeture desdites branches.

3. Le couteau de la revendication 2, ledit levier articulé (22) étant lié de manière articulée à l'une desdites branches (20) au moyen d'un deuxième axe (24) perpendiculaire audit premier axe (12).

4. Le couteau de la revendication 3, ledit levier (22) étant lié de manière articulée à une première dite branche (20),
la deuxième dite branche (21) étant placée entre ladite première branche (20) et ledit levier (22) en position d'utilisation déployée dudit coupe-ongle, de manière à ce qu'une portion (224) dudit levier (22) vienne en appui contre ladite deuxième branche (22) pour l'appuyer contre ladite première branche (20) lors de l'actionnement du coupe-ongle,
ledit levier (22) étant apte à pivoter pour le replier, de manière à ce ladite première branche (20) soit placée entre ladite deuxième branche (21) et ledit levier (22).

5. Le couteau de l'une des revendications 2 à 4, lesdites branches (20, 21) et ledit levier (22) étant tous trois formés à partir de feuilles de métal découpées et éventuellement pliées.

6. Le couteau de l'une des revendications 2 à 5, ledit levier (22) comportant une portion centrale (220) destinée à l'actionner au moyen du doigt,
et une portion latérale (221) repliée à 90° de chaque côté de ladite portion centrale (220), les deux portions latérales étant chacune percées d'un trou (223) pour relier ledit levier (22) à l'une des branches (20) au moyen d'un axe (24).

7. Le couteau de l'une des revendications 1 à 6, comportant des éléments de butée élastique (130 ; 206, 216) pour maintenir ledit coupe-ongle (2) dans une position d'utilisation prédéterminée stable dans le prolongement du corps dudit couteau (2).

8. Le couteau de l'une des revendications 1 à 7, ledit coupe-ongle étant maintenu par frottement dans la position repliée entre lesdites platines.

9. Le couteau de l'une des revendications 1 à 8, comportant un bouton (14) pour dégager ledit coupe-ongle de la position repliée entre lesdites platines (11).

10. Le couteau de la revendication 9, ledit bouton (14) étant agencé pour pivoter entre une position dans laquelle une portion dudit bouton agit pour maintenir ledit coupe-ongle replié, et une position pivotée dans laquelle un ergot (141) lié audit bouton (14) permet de soulever ledit coupe-ongle hors du volume de rangement entre lesdites platines.

11. Le couteau de l'une des revendications 2 à 10, comportant des éléments (204, 225) pour maintenir ledit levier (22) fermé au-dessus desdites branches (20, 21) en position repliée.

12. Le couteau de l'une des revendications 2 à 11, comportant des éléments (215 ; 214, 224) pour maintenir ledit levier (22) dans une position prédéterminée stable lorsqu'il est déployé.

13. Le couteau de l'une des revendications 2 à 12, dans lequel lesdites branches (20, 21) sont déformables élastiquement et tendent à s'écarter l'une de l'autre,
ledit coupe-ongle étant actionné en rapprochant lesdites branches l'une de l'autre à l'encontre de la force élastique écartant lesdites branches.

14. Le couteau de la revendication 13, un élément (23) permettant de limiter l'écartement maximal entre lesdites branches (20, 21).

## Claims

1. Pocket knife (1) comprising:
two parallel bolt plates (11) serving as handles,
a plurality of utensils (16) pivoting between a position folded between said bolt plates and a position deployed outside said bolt plates,
a nail clipper (2) pivoting around at least one axle (12) perpendicular to the plate of said bolt plates, between a position folded back between said bolt plates and a deployed position,
**characterized in that** said deployed position lies in the extension of said bolt plates.

2. The pocket knife of claim 1, said nail clipper (2) comprising:
two parallel branches (20, 21) capable of being opened or closed, in the manner of a pincer, for cutting a nail slid between the extremities (200, 210) of the branches,
and an articulated lever (22) for effecting the opening and closing of said branches.

3. The knife of claim 2, said articulated lever (22) being connected in articulated fashion to one of said branches (20) by means of a second axle (24) perpendicular to said first axle (12).

4. The knife of claim 3, said lever (22) being connected in articulated fashion to a first said branch (20),
the second said branch (21) being placed between said first branch (20) and said lever (22) in a deployed use position of said nail clipper, so that one portion (224) of said lever (22) comes to rest against said second branch (21) to press it against said first branch (20) when the nail clipper is actuated,
said lever (22) being capable of pivoting to be folded back, so that said first branch (20) is placed between said second branch (21) and said lever (22).

5. The knife of one of the claims 2 to 4, said branches (20, 21) and said lever (22) being all three formed from cut and possibly folded metal sheets.

6. The knife of one of the claims 2 to 5, said lever (22) comprising a central portion (220) designed to actuated it by means of a finger,
and a lateral position (221) folded at 90° on each side of said central portion (220), both lateral portions being each bored with a hole (223) for connecting said lever (22) to one of the branches (20) by means of an axle (24).

7. The knife of one of the claims 1 to 6, comprising elastic stopper elements (130; 206, 216) for holding said nail clipper (2) in a predetermined stable user position in the extension of the body of said knife (2).

8. The knife of one of the claims 1 to 7, said nail clipper being held by friction in the folded-back position between said bolt plates (11).

9. The knife of one of the claims 1 to 8, comprising a push-button (14) for disengaging said nail clipper from the folded-back position between said bolt plates (11).

10. The knife of claim 9, said push-button (14) being arranged so as to pivot between a position in which one portion of said push-button acts to hold said nail clipper folded back and one pivoted position where a pin (141) connected to said push-button (14) allows said nail clipper to be lifted outside from the storage volume between said bolt plates.

11. The knife of one of the claims 2 to 10, comprising elements (204, 225) for holding said lever (22) closed above said branches (20, 21) in folded-back position.

12. The knife of one of the claims 2 to 11, comprising elements (215; 214, 224) for holding said lever (22) in a predetermined stable position when it is deployed.

13. The knife of one of the claims 2 to 12, wherein said branches (20, 21) are elastically deformable and tend to move apart from one another,
said nail clipper being actuated by moving said branches towards one another against the elastic force moving said branches apart.

14. The knife of claim 13, an element (23) enabling the maximum distance between said branches (20, 21) to be limited.

## Patentansprüche

1. Taschenmesser (1) mit:
zwei parallelen Riegelplatten (11), welche als Griffe dienen,
einer Vielzahl von Utensilien (16), welche zwischen einer zwischen den besagten Riegelplatten gefalteten Position und einer ausserhalb der besagten Riegelplatten ausgezogenen Position drehen,
einem Nagelknipser (2), welcher um mindestens eine zur Ebene der besagten Riegelplatten senkrechte Achse (12) zwischen einer zwischen den besagten Riegelplatten gefalteten Position und einer ausgezogenen Position dreht,
**dadurch gekennzeichnet, dass** die besagte ausgezogene Position in der Verlängerung der besagten Riegelplatten ist.

2. Das Taschenmesser des Anspruchs 1, wobei der Nagelknipser (2) umfasst:
zwei parallele Schenkel (20, 21), welche geöffnet oder geschlossen werden können, auf die Weise einer Zange, um einen zwischen den Extremitäten (200, 210) der Schenkel eingeführten Nagel zu schneiden,
und einen gelenkigen Hebel (22), um auf das Öffnen und das Schliessen der besagten Schenkel einzuwirken.

3. Das Messer des Anspruchs 2, wobei der besagte gelenkige Hebel (22) auf gelenkige Weise mit einem der besagten Schenkel (20) mittels einer zweiten, zur besagten ersten Achse (12) senkrechten Achse (24) verbunden ist.

4. Das Messer des Anspruchs 3, wobei der besagte Hebel (22) auf gelenkige Weise mit einem ersten besagten Schenkel (20) verbunden ist,
wobei der zweite besagte Schenkel (21) zwischen dem ersten besagten Schenkel (20) und dem besagten Hebel (22) in der ausgezogenen Gebrauchsposition des besagten Nagelknipsers angeordnet ist, so dass eine Portion (224) des besagten Hebels (22) gegen den zweiten Schenkel (21) ruht, um ihn gegen den besagten ersten Schenkel (20) während der Betätigung des Nagelknipsers zu drücken,
wobei der besagte Hebel (22) in der Lage ist zu drehen, um gefaltet zu werden, so dass der erste besagte Schenkel (20) zwischen dem besagten zweiten Schenkel (21) und dem besagten Hebel (22) angeordnet ist.

5. Das Messer von einem der Ansprüche 2 bis 4, wobei die besagten Schenkel (20, 21) und der besagte Hebel (22) alle drei aus gestanzten und möglicherweise gebogenen Metallfolien geformt werden.

6. Das Messer von einem der Ansprüche 2 bis 5, wobei der besagte Hebel (22) eine zentrale Portion (220) umfasst, die für seine Betätigung mittels eines Fingers vorgesehen ist,
und eine seitliche Portion (221) umfasst, die auf 90° auf jeder Seite der besagten zentralen Portion (220) gefaltet ist, wobei in beiden seitlichen Portionen jeweils ein Loch (223) gebohrt ist, um den besagten Hebel (22) mit einem der Schenkel (20) mittels einer Achse (24) zu verbinden.

7. Das Messer von einem der Ansprüche 1 bis 6, mit elastischen Stopperelementen (130; 206, 216), um den besagten Nagelknipser (2) in einer vorbestimmten stabilen Gebrauchsposition in der Verlängerung des Körpers des besagten Messers (2) zu halten.

8. Das Messer von einem der Ansprüche 1 bis 7, wobei der besagte Nagelknipser durch Reibung in der zwischen den besagten Riegelplatten gefalteten Position gehalten wird.

9. Das Messer von einem der Ansprüche 1 bis 8, mit einem Knopf (14), um den besagten Nagelknipser von der zwischen den besagten Riegelplatten (11) gefalteten Position zu befreien.

10. Das Messer des Anspruchs 9, wobei der besagte Knopf (14) so angeordnet ist, um zwischen einer Position, in welcher eine Portion des besagten Knopfes so einwirkt, um den besagten Nagelknipser gefaltet zu halten, und einer gedrehten Position, in welcher ein mit dem besagten Knopf (14) verbundener Zapfen (141) es erlaubt, den besagten Nagelknipser ausserhalb des Verstauungsvolumens zwischen den besagten Riegelplatten rauszuheben, zu drehen.

11. Das Messer von einem der Ansprüche 2 bis 10, mit Elementen (204, 225), um den besagten Hebel (22) geschlossen über den besagten Schenkeln (20, 21) in gefalteter Position zu halten.

12. Das Messer von einem der Ansprüche 2 bis 11, mit Elementen (215; 214, 224), um den besagten Hebel (22) in einer vorbestimmten stabilen Position zu halten, wenn er ausgezogen ist.

13. Das Messer von einem der Ansprüche 2 bis 12, worin die besagten Schenkel (20, 21) elastisch verformbar sind und dazu tendieren, auseinander zu gehen,
wobei der besagte Nagelknipser betätigt wird, indem die besagten Schenkel zu einander entgegen der elastischen, die besagten Schenkel auseinander drückende Kraft geführt werden.

14. Das Messer des Anspruchs 13, wobei ein Element (23) es erlaubt, den maximalen Abstand zwischen den besagten Schenkeln (20, 21) einzuschränken.
